# EUROPEAN PATENT SPECIFICATION

(11) **EP 0 809 062 B1**
(45) Date of publication and mention of the grant of the patent: **22.08.2001**
(21) Application number: 97108144.3
(22) Date of filing: 20.05.1997
(51) Int. Cl.: F16L 19/02, F16L 13/14, F16L 41/02, F16L 41/08

(54) **Method for fluidtight connecting a first and at least a second pipe**
Verfahren für eine flüssigkeitsdichte Verbindung eines ersten und mindestens eines zweiten Rohres
Procédé pour la connexion étanche d'un premier tuyau avec au moins un second tuyau

(30) Priority: 21.05.1996 IT TO960431
(43) Date of publication of application: 26.11.1997
(73) Proprietor: Valeo Sicurezza Abitacolo S.p.A., 10026 Santena (IT)
(72) Inventor: Dal Palu', Attilio, 10098 Rivoli (IT)
(74) Representative: Jorio, Paolo

(56) References cited:
- EP-A- 0 582 543
- DE-C- 880 410

## Description

The present invention relates to a method for fluidtight connecting a first and at least a second pipe.

Two or more pipes are known to be connected by a tubular connecting body comprising two or more end portions having respective circumferential outer ribs, and each of which is fitted with a respective end portion of one of the pipes for connection.

The end portion of each pipe is then forced against the respective end portion of the tubular body by a respective tubular retaining body for radially compressing and deforming the end portion of the pipe and so connecting it in fluidtight manner to the tubular connecting body.

Each retaining body is normally formed by injecting the material forming the retaining body directly on to the outer lateral surface of the end portion of the pipe.

Connections made as described above, however, are invariably unreliable, especially when subjected to high temperatures and/or when the pipes are subjected to traction which tends to withdraw the pipes from the tubular connecting body. In some cases, in fact, when the material forming the retaining body is injected, the end portion of the pipe tends to flare, so that the material is injected between the end portion of the pipe and the tubular connecting body, thus impairing sealing and, above all, the withdrawal resistance of the pipe.

EP-A-582543 discloses another method for fluidtight connecting two pipes comprising the steps of fitting end portions of the pipes onto an inner tubular connecting body provided with grooves; fitting an outer tubular retaining body provided with grooves onto the end portions of the pipes; and pressing the outer retaining body onto the end portions of the pipes so as to deform the pipes and insert portions of the pipes inside the grooves of the inner connecting body and the outer retaining body. The step of pressing the outer retaining body onto the pipes is carried out by inserting the inner connecting body, the pipes and the outer retaining body inside a first deformable tubular compression body having a cylindrical inner surface and a frustoconical outer surface and then forcedly axially inserting the first compression body into a second tubular compression body having an inner frustoconical surface. The forced insertion of the first compression body inside the second compression body causes the outer retaining body to be pressed onto the pipes and consequently the end portions of the pipes get deformed and enter the grooves of the inner connecting body and the outer retaining body.

DE-C-880410 discloses another method for fluidtight connecting two metallic pipes comprising the steps of fitting end portions of the pipes onto a tubular connecting body provided with grooves and then folding the end portion of the pipes into the grooves.

It is an object of the present invention to provide a straightforward, low-cost method of fluidtight connecting a first and at least a second pipe, designed to overcome the aforementioned drawbacks.

According to the present invention, there is provided a method of fluidtight connecting a first and at least a second pipe, as defined in claim 1.

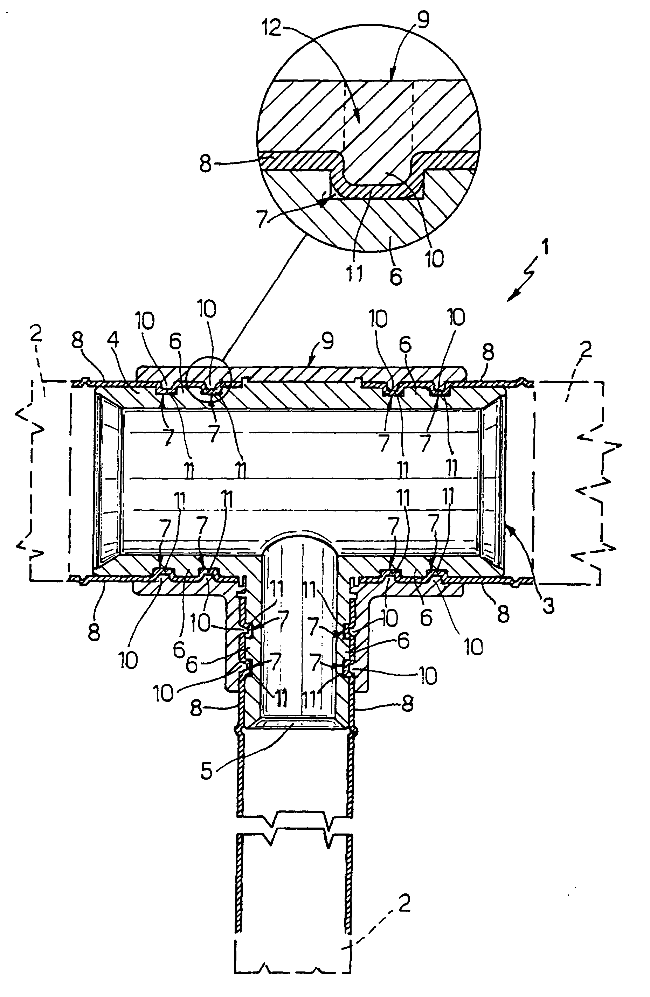

A preferred, non-limiting embodiment of the invention will be described by way of example with reference to the accompanying drawing.

Number 1 in the accompanying drawing indicates a device for connecting two or more pipes 2 (three in the example shown) made of thermally deformable material. Device 1 comprises a T-shaped tubular connecting body 3 in turn comprising a substantially cylindrical main tubular element 4, and a substantially cylindrical secondary tubular branch element 5 extending integrally and perpendicularly from a mid portion of main tubular element 4. Main and secondary tubular elements 4 and 5 comprise respective end portions 6 on which are formed respective pairs of circumferential outer grooves 7 with a substantially U-shaped cross section.

As shown in the accompanying drawing, end portions 6 are fitted with respective end pieces 8 of respective pipes 2, which are maintained connected to body 3 by a tubular retaining body 9 surrounding end pieces 8 and part of the outer lateral surface of body 3, and comprising, for each groove 7, a respective inner annular projection 10. Each projection 10 extends facing and partly inside respective groove 7, and, in use, forces an intermediate portion 11 of end piece 8 of respective pipe 2 inside respective groove 7 to form a retaining tooth for retaining respective pipe 2 to body 3, and, at the same time, a labyrinth seal between end portion 6 of body 3 and respective end piece 8 of pipe 2.

Pipes 2 are connected to body 3 by fitting end pieces 8 of pipes 2 to respective end portions 6 of body 3; inserting body 3 and end pieces 8 inside a mold (not shown); injecting a fluid material inside the mold and outside end pieces 8 of pipes 2; and setting the fluid material to form tubular retaining body 9.

When set, body 9 radially compresses end piece 8 of each pipe 2 on to respective end portion 6 of body 3 to fluidtight connect pipes 2 to body 3. More specifically, as it is injected and set, the injected material deforms intermediate portions 11 of end piece 8 of each pipe 2 at respective grooves 7 so that intermediate portions 11 are inserted inside respective grooves 7.

As a result, a projection 10 is formed at each of grooves 7, so that, at each groove 7, body 9 comprises an annular portion 12 thicker than the other adjacent portions.

As the injected material sets, each annular portion 12, by being thicker than the other annular portions of body 9, exerts greater radial stress than the other annular portions to push intermediate portions 11 of pipes 2 firmly inside respective grooves 7 and so provide for improved sealing.

The advantages of the present invention will be clear from the foregoing description. In particular, the insertion of intermediate portions 11 of end pieces 8 of pipes 2 inside respective grooves 7 provides for a better fluidtight connection of pipes 2 to body 3 as compared with known devices. The labyrinths formed at grooves 7, in fact, prevent any possibility of the fluid material leaking between pipes 2 and body 3, and in particular past grooves 7.

Moreover, the insertion of intermediate portions 11 of end pieces 8 of pipes 2 inside respective grooves 7 also provides, as compared with known devices, for more firmly securing pipes 2 to respective end portions 6 of body 3, and so increasing the withdrawal resistance of pipes 2 from body 3.

The connecting body 3 may differ from that described, and comprise only main tubular element 4 for connecting only two pipes 2. Or connecting body 3 may form an end portion of, and therefore be integral with, one of pipes 2.

Moreover, a different number of circumferential grooves 7 may be formed on each end portion 6 of connecting body 3. In particular, each end portion 6 may comprise only one circumferential groove 7.

Finally, the cross section of grooves 7 may differ from that described by way of example; and tubular retaining body 9, as opposed to being formed in one piece, may comprise a number of separate retaining bodies, each for an end piece 8 of a respective pipe 2, and not necessary formed in the same injection operation.

## Claims

1. A method of fluidtight connecting a first and at least a second pipe (2), the method comprising the steps of using a tubular connecting body (3) for connecting said pipes (2); fitting an end piece (8) of said first pipe (2) to at least a first end portion (6) of said connecting body (3), at least said end piece (8) of said first pipe (2) being made of deformable material; and fluidtight connecting said end piece (8) to the first end portion (6) of said connecting body (3); the step of connecting said end piece (8) to said first end portion (6) comprising the steps of forming on said first end portion (6) of said connecting body (3) at least a first circumferential outer groove (7); deforming said end piece (8) of said first pipe (2) at least at said first groove (7); inserting at least an intermediate portion (11) of the end piece (8) inside said first groove (7); and retaining the deformed said intermediate portion (11) inside said first groove (7); characterized in that the steps of deforming said end piece (8) of said first pipe (2) and inserting said intermediate portion (11) inside said first groove (7) comprise the steps of inserting at least said first end portion (6) of said connecting body (3) and said end piece (8) of said first pipe (2) fitted to the first end portion (6) inside a mold; injecting a fluid material inside said mold and at least about said end piece (8) of said first pipe (2); and setting said fluid material to form a tubular retaining body (9) surrounding at least said end piece (8) of said first pipe (2) to retain said intermediate portion (11) of said end piece (8) inside said first groove (7).

2. The method as claimed in Claim 1, characterized in that said intermediate portion (11) is inserted inside said first groove (7) by permanently deforming the intermediate portion (11).

3. The method as claimed in Claim 2, characterized in that said connecting body (3) is separate from said first and second pipes (2); and by comprising the further steps of forming at least a second circumferential outer groove (7) on a second end portion (6) of said connecting body (3); fitting an end piece (8) of said second pipe (2) to said second end portion (6), at least said end piece (8) of said second pipe (2) being made of deformable material; deforming said end piece (8) of said second pipe (2) at least at said second groove (7); inserting at least an intermediate portion (11) of the end piece (8) inside the second groove (7); and retaining the deformed said intermediate portion inside said second groove (7).

4. The method as claimed in Claim 3, characterized in that deformation of the end pieces (8) of both said pipes (2) and insertion of said intermediate portions (11) inside the respective grooves (7) are performed in one operation.

## Patentansprüche

1. Verfahren zur flüssigkeitsdichten Verbindung eines ersten und mindestens eines zweiten Rohres (2), wobei das Verfahren die folgenden Schritte aufweist: Verwenden eines rohrförmigen Verbindungskörpers (3) zum Verbinden der Rohre (2); Anbringen eines Endstückes (8) des ersten Rohres (2) an mindestens'einen ersten Endabschnitt (6) des Verbindungskörpers (3), wobei mindestens das Endstück (8) des ersten Rohres (2) aus einem verformbaren Material gefertigt ist; und flüssigkeitsdichtes Verbinden des Endstücks (8) mit dem ersten Endabschnitt (6) des Verbindungskörpers (3); wobei der Schritt des Verbindens des Endstücks (8) mit dem ersten Endabschnitt (6) folgende Schritte aufweist: Bilden mindestens einer ersten äußeren Umfangsnut an dem ersten Endabschnitt (6) des Verbindungskörpers (3); Verformen des Endstücks (8) des ersten Rohres (2) zumindest an der ersten Nut (7); Einführen mindestens eines Zwischenabschnitts (11) des Endstücks (8) in die erste Nut (7); und Halten des verformten Zwischenabschnitts (11) in der ersten Nut (7); dadurch gekennzeichnet, daß die Schritte des Verformens des Endstücks (8) des ersten Rohres (2) und Einführens des Zwischenabschnittes (11) in die erste Nut (7) die folgenden Schritte aufweisen: Einführen mindestens des ersten Endabschnitts (6) des Verbindungskörpers (3) und des Endstückes (8) des ersten Rohres (2), welches an dem ersten Endabschnitt (6) in einer Form angebracht ist; Einspritzen eines flüssigen Materials in die Form und mindestens um das Endstück (8) des ersten Rohres (2) herum; und Erhärten des flüssigen Materials, um einen rohrförmigen Haltekörper (9) zu bilden, welcher zumindest das Endstück (8) des ersten Rohres (2) umgibt, um den Zwischenabschnitt (11) des Endstücks (8) in der ersten Nut (7) zu halten.

2. Verfahren nach Anspruch 1, dadurch gekennzeichnet, daß der Zwischenabschnitt (11) in die erste Nut (7) durch permanentes Verformen des Zwischenabschnitts (11) eingeführt wird.

3. Verfahren nach Anspruch 2, dadurch gekennzeichnet, daß der Verbindungskörper (3) von dem ersten und zweiten Rohr (2) getrennt ist; und daß es die weiteren Schritte aufweist: Bilden mindestens einer zweiten äußeren Umfangsnut (7) an einem zweiten Endabschnitt (6) des Verbindungskörpers (3); Anbringen eines Endstücks (8) des zweiten Rohres (2) an dem zweiten Endabschnitt (6), wobei mindestens das eine Endstück (8) des zweiten Rohres (2) aus verformbarem Material gefertigt ist; Verformen des Endstückes (8) des zweiten Rohres (2) mindestens an der zweiten Nut (7), Einführen mindestens eines Zwischenabschnitts (11) des Endstücks (8) in die zweite Nut (7); und Halten des verformten Zwischenabschnitts in der zweiten Nut (7).

4. Verfahren nach Anspruch 3, dadurch gekennzeichnet, daß die Verformung der Endstücke (8) beider Rohre (2) und Einführen der Zwischenabschnitte (11) in die entsprechenden Nuten (7) in einem Vorgang ausgeführt werden.

## Revendications

1. Procédé de liaison étanche d'un premier et d'au moins un second tube (2), comprenant les étapes consistant à utiliser un corps de liaison tubulaire (3) pour relier lesdits tubes (2) ; à monter une extrémité (8) dudit premier tube (2) sur au moins une première partie d'extrémité (6) dudit corps de liaison (3), au moins ladite extrémité (8) dudit premier tube (2) étant constituée d'un matériau déformable ; et à relier de manière étanche ladite extrémité (8) à la première partie d'extrémité (6) du corps de liaison (3), l'étape consistant à relier ladite extrémité (8) à ladite première partie d'extrémité (6) comprenant les étapes consistant à former sur ladite première partie d'extrémité (6) du corps de liaison (3) au moins une gorge circonférentielle extérieure (7) ; à déformer ladite extrémité du premier tube (2) au moins au niveau de la première gorge (7) ; à insérer au moins une partie intermédiaire (11) de l'extrémité (8) dans ladite première gorge (7) ; et à retenir ladite partie intermédiaire déformée (11) dans la première gorge (7) ; caractérisé en ce que les étapes consistant à déformer l'extrémité (8) du premier tube (2) et à insérer ladite partie intermédiaire (11) dans la première gorge (7) comprennent les étapes consistant à insérer au moins ladite première partie d'extrémité (6) du corps de liaison (3) et l'extrémité (8) du premier tube (2) monté sur la première partie d'extrémité (6) dans un moule ; à injecter un matériau fluide dans le moule et au moins autour de l'extrémité (8) du premier tube (2) ; et à laisser prendre le matériau fluide pour former un élément de rétention tubulaire (9) qui entoure au moins ladite extrémité (8) du tube (2) pour retenir la partie intermédiaire (11) de l'extrémité (8) dans la première gorge (7) .

2. Procédé selon la revendication 1, caractérisé en ce que ladite partie intermédiaire (11) est insérée dans la première gorge (7) en déformant de manière permanente la partie intermédiaire (11).

3. Procédé selon la revendication 2, caractérisé en ce que le corps de liaison (3) est séparé du premier et du second tube (2) ; et en ce qu'il comprend en outre les étapes consistant à former au moins une seconde gorge extérieure circonférentielle (7) sur une seconde partie d'extrémité (6) du corps de liaison (3) ; à monter une extrémité (8) du second tube (2) sur ladite seconde partie d'extrémité (6), au moins l'extrémité (8) du second tube (2) étant constituée d'un matériau déformable ; à déformer l'extrémité (8) dudit second tube (2) au moins au niveau de la seconde gorge (7) ; à insérer au moins une partie intermédiaire de l'extrémité (8) dans la seconde gorge (7) ; et à retenir la partie intermédiaire déformée dans la seconde gorge (7).

4. Procédé selon la revendication 3, caractérisé en ce que la déformation de l'extrémité (8) de chacun des tubes (2) et l'insertion desdites parties intermédiaires (11) dans les gorges respectives (7) sont réalisées en une seule opération.
